# EUROPEAN PATENT SPECIFICATION

(11) **EP 3 840 285 B1**
(45) Date of publication and mention of the grant of the patent: **04.12.2024**
(21) Application number: 19849386.8
(22) Date of filing: 14.08.2019
(51) Int. Cl.: G06F 21/64, H04L 9/32, H04L 9/00, H04N 1/00, H04N 1/32, H04N 1/387

(54) **DEVICE, METHOD, AND PROGRAM FOR CONFIRMING ELECTRONIC SIGNATURE**
VORRICHTUNG, VERFAHREN UND PROGRAMM ZUR BESTÄTIGUNG EINER ELEKTRONISCHEN SIGNATUR
DISPOSITIF, PROCÉDÉ ET PROGRAMME PERMETTANT DE CONFIRMER UNE SIGNATURE ÉLECTRONIQUE

(30) Priority: 14.08.2018 JP 2018152733; 01.08.2019 JP 2019142428
(43) Date of publication of application: 23.06.2021
(73) Proprietor: bitFlyer Blockchain, Inc., Minato-ku Tokyo 1076237 (JP)
(72) Inventor: KOMIYAMA Takafumi, Tokyo 107-6237 (JP)
(74) Representative: Marks & Clerk LLP
(86) International application number: PCT/JP2019/031998
(87) International publication number: WO 2020/036208

(56) References cited:
- JP-A- 2005 045 486
- JP-A- 2005 184 052
- JP-A- 2006 107 099
- JP-A- 2010 028 689
- JP-A- 2016 192 719
- JP-A- H11 298 469
- US-A1- 2016 055 552
- US-A1- 2016 055 552
- US-A1- 2016 292 804

## Description

### TECHNICAL FIELD

The present invention relates to an apparatus, method and program therefor for confirming digital signatures, and more particularly, to an apparatus, method and program therefor for confirming digital signatures with respect to mainly paper documents.

### BACKGROUND ART

Every day, countless numbers of documents are created, such as approval documents for internal decisions and contracts for external transactions, and approved by those who have the authority to do so.
US2016055552 relates to methods for generating and verifying an electronic bill with an anti-counterfeiting two-dimensional code and systems of the same. The method of generating an electronic bill with an anti-counterfeiting two-dimensional code comprises reading an original electronic bill picture and generating a temporary electronic bill picture with a determined region for embedding two-dimensional code; calculating digest data for the temporary electronic bill picture by using an information digest algorithm and encrypting the obtained digest data to generate an anti-counterfeiting two-dimensional code; and embedding the anti-counterfeiting two-dimensional code into said region of the original electronic bill picture to obtain an electronic bill with the anti-counterfeiting two-dimensional code.

### SUMMARY OF INVENTION

### TECHNICAL PROBLEM

However, many documents are still in paper form, and there is a need to improve efficiency through digitalization. The present invention is made in view of such a problem and the objective of the present invention is to facilitate the utilization of digital signatures.

### SOLUTION TO PROBLEM

In order to achieve this objective, the first aspect of the present invention is a method for performing a digital signature to a document, comprising: generating a signature with respect to data to be signed using a secret key, wherein the data to be signed is a digital document obtained by digitalizing the document, an area within which filled with a predetermined color, and transmitting a digital document formed by placing the signature represented by a two-dimensional code in the area of the data to be signed.

The second aspect of the present invention is the method according to the first aspect, wherein the data to be signed includes date or date and time of a signature outside the area.

The third aspect of the present invention is the method according to the first aspect, wherein the predetermined color is 0xFFFFFF or 0xFBFBFB.

The fourth aspect of the present invention is the method according to any one of the first to third aspects, wherein the two-dimensional code represents a signor ID in addition to the signature.

The fifth aspect of the present invention is a program for causing a computer to execute a method for performing a digital signature, the method comprising: generating a signature with respect to data to be signed using a secret key, wherein the data to be signed is a digital document obtained by digitalizing the document, an area within which filled with a predetermined color, and transmitting a digital document formed by placing the signature represented by a two-dimensional code in the area of the data to be signed.

The sixth aspect of the present invention is an apparatus for performing a digital signature to a document, configured to: generate a signature with respect to data to be signed using a secret key, wherein the data to be signed is a digital document obtained by digitalizing the document, an area within which filled with a predetermined color, and transmit a digital document formed by placing the signature represented by a two-dimensional code in the area of the data to be signed.

The seventh aspect of the present invention is a method for confirming a digital signature to a document, comprising: receiving a digital document formed by placing a signature represented by a two-dimensional code in an area within data to be signed obtained by digitalizing the document, the area being filled with a predetermined color, wherein the signature is a signature with respect to the data to be signed using a secret key, verifying the signature using a public key, and when the verification succeeds, displaying a visual element overlaid to the area, wherein the visual element is for confirming success of the verification.

The eight aspect of the present invention is the method according to the seventy aspect, wherein the visual element is associated with an owner of the public key.

The ninth aspect of the present invention is the method according to the eighth aspect, wherein the visual element is a seal associated with an owner of the public key.

The tenth aspect of the present invention is the method according to the seventh aspect, wherein the two-dimensional code represents a signor ID in addition to the signature.

The eleventh aspect of the present invention is the method according to the tenth aspect, wherein the signor ID is the public key.

The twelfth aspect of the present invention is the method according to the eleventh aspect, further comprising confirming legitimacy of the received public key based on the public key with reference to a correspondence between public keys and possible signors.

The thirteenth aspect of the present invention is the method according to the tenth aspect, wherein the signor ID is not the public key, and wherein the public key is obtained based on the signor ID with reference to a correspondence between signor IDs of possible signors and public keys.

The fourteenth aspect of the present invention is the method according to the eleventh or thirteenth aspect, further comprising transmitting an identity confirmation request of an owner of the public key.

The fifteen aspect of the present invention is a program for causing a computer to perform a method for confirming a digital signature to a document, the method comprising: receiving a digital document formed by placing a signature represented by a two-dimensional code in an area within data to be signed obtained by digitalizing the document, the area being filled with a predetermined color, wherein the signature is a signature with respect to the data to be signed using a secret key, verifying the signature using a public key, and when the verification succeeds, displaying a visual element overlaid to the area, wherein the visual element is for confirming success of the verification.

The sixteenth aspect of the present invention is a device for confirming a digital signature to a document, configured to: receive a digital document formed by placing a signature represented by a two-dimensional code in an area within data to be signed obtained by digitalizing the document, the area being filled with a predetermined color, wherein the signature is a signature with respect to the data to be signed using a secret key, verify the signature using a public key, and when the verification succeeds, display a visual element overlaid to the area, wherein the visual element is for confirming success of the verification.

The seventeenth aspect of the present invention is a method for confirming a digital signature to a document, comprising: receiving a digital document formed by placing a signature represented by a two-dimensional code in an area within data to be signed obtained by digitalizing the document, the area being filled with a predetermined color, wherein the signature is a signature with respect to the data to be signed using a secret key, verifying the signature using a public key, and when the verification succeeds, displaying a visual element for confirming success of the verification.

The eighteenth aspect of the present invention is the method according to the seventeenth aspect, wherein the verification includes determining whether a signature represented by the two-dimensional code is a signature with respect to a digital document formed by filling the area of the received digital document with the predetermined color.

The nineteenth aspect of the present invention is a method for performing digital signatures to a document to be signed by a first signor and a second signor, comprising: receiving, from a first apparatus used by the first signor, a first signature using a first secret key to data to be signed obtained by digitalizing the document, a first and second area within which filled with a predetermined color, receiving, from a second apparatus used by the second signor, a second signature using a second secret key to the data to be signed, and generating a signed digital document by placing a two-dimensional code representing the first signature in the first area and placing a two-dimensional code representing the second signature to the second area.

The twentieth aspect of the present invention is a method for performing digital signatures to a document to be signed by a first signor and a second signor, comprising: receiving, from a first apparatus used by the first signor, a first signed digital document formed by placing a two-dimensional code representing a fist signature using a first secret key to data to be signed within a first area, wherein the first area and a second area of the data to be signed within a digital document obtained by digitalizing the document are filled with a predetermined color, transmitting, to a second apparatus used by the second signor, the first signed digital document, and receiving, from the second apparatus, a signed digital document formed by placing a two-dimensional code representing a second signature using a second secret key to the first signed digital document within the second area of the first signed digital document.

### ADVANTAGEOUS EFFECT OF INVENTION

According to one aspect of the invention, in a method for confirming a digital signature, by generating a signature with respect to data to be signed formed by filling an area within a digital document with a predetermined color, using a secret key, the digital document formed by digitalizing the document, and forming a digital document by placing the signature represented by a two-dimensional code in the area of the data to be signed, the utilization of a digital signature is facilitated.

### BRIEF DESCRIPTION OF DRAWINGS

FIG. 1 shows a digital signature apparatus according to the first embodiment of the invention.
FIG. 2 schematically shows the data to be signed according to the first embodiment of the present invention.
FIG. 3 shows the flow of the digital signature method according to the first embodiment of the present invention.
FIG. 4 shows an example of applying a two-dimensional code to a signature according to the first embodiment of the present invention.
FIG. 5 shows the flow of the confirmation method of a digital signature according to the first embodiment of the invention.
FIG. 6 shows the flow of the digital signature method according to the second embodiment of the present invention.

### DESCRIPTION OF EMBODIMENTS

Below, embodiments of the present invention are explained in detail with reference to the drawings.

### (first embodiment)

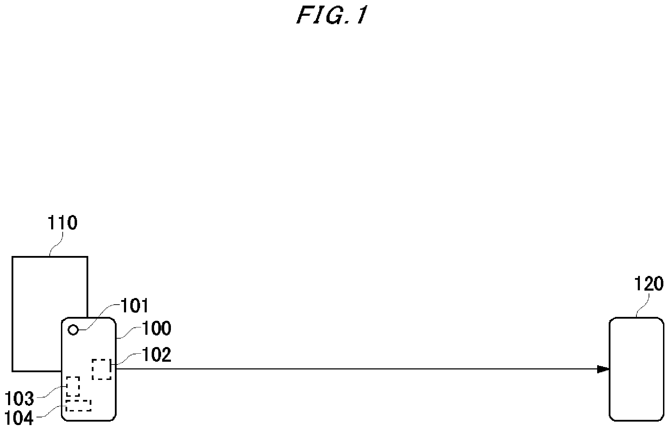

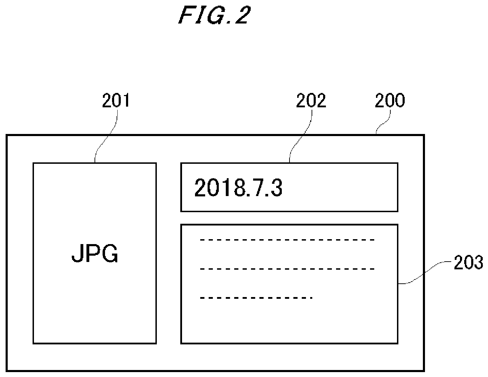

FIG. 1 shows a digital signature apparatus according to the first embodiment of the present invention. The digital signature apparatus 100 comprises an image capturing unit 101 such as an image sensor, and digitalizes a document 110 to be approved by an approver using the apparatus 100 as an image 201. For example, the image can be in a general JPEG format or the like. Then, the digital signature is performed with respect to data to be signed 200 (see FIG. 2) including the date 202, such as the date of approval, the input 203 at the time of signature, etc., as necessary. The date 202 can be a date and time, but for simplicity, it will be described as a date below.

Although the following description focuses on an example of digitalizing a document 110 as an image, the present invention is more broadly applicable to the addition of a digital signature to a digital document formed by digitalizing a document 110 in general. It includes, for example, a document in PDF format, in addition to images in various formats. The digital document to which the present invention can be applied may be a single-page document or a multiple-page document. If multiple pages of a document 110 are captured as single-page images in JPEG format, for example, they may be converted into a multiple-page digital document at the digital signature apparatus 100.

The digital signature apparatus 100 is a computer comprising a communication unit 102 such as a communication interface, a processing unit 103 such as a processor or a CPU, and a storage unit 104 including a storage apparatus or a storage medium, such as a memory or a hard disk, in addition to a capturing unit 101, and by executing a predetermined program, each process described herein can be realized. The program may include one or more programs, and may be recorded in a computer-readable storage medium to form a non-transitory program product. The program can be stored in a storage unit 104 or in a storage apparatus or a storage medium accessible from the apparatus 100 and be executed in the processing unit 103. The digital signature apparatus 100 can be a portable terminal capable of capturing images, such as a smartphone, a tablet, etc.

The device 120 can communicate directly or indirectly with the digital signature apparatus 100 via a computer network to receive a signed document image. It can have a similar hardware configuration, although not shown. It does not necessarily need to comprise an image capturing unit.

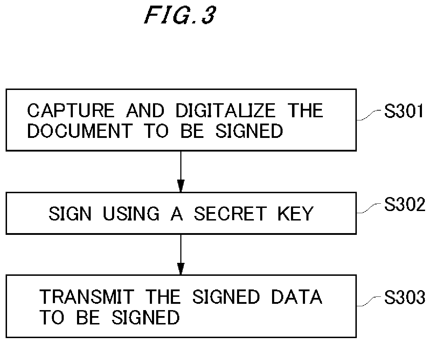

FIG. 3 shows the flow of the digital signature method according to the first embodiment of the present invention. First, a digital signature apparatus 100 takes an image of a document 110 to be signed and digitalizes it as an image 201 (S301). The date 202, comments 203, and the like are added as necessary to the document image 201 to form data to be signed 200, and it is signed using a secret key stored in the digital signature apparatus 100 or in a storage medium or a storage apparatus accessible from the digital signature apparatus 100 (S302). The digital signature apparatus 100 then adds a signature to the data to be signed 200 to transmit it to the device 120 (S303). The signature, and even the transmission may be automatically performed in response to the document being captured or the captured result being saved. The data to be signed 200 and the signature added to it may be collectively referred to as "data to be verified."

If the document 110 is a contract, the second party who received the data to be verified from the first party of the contract, signs the data to be signed 200 or the data to be verified with a secret key stored in an apparatus of the second party or a storage medium or a storage apparatus accessible from the second party's apparatus, and transmits the data to the first party. There is a case where the second party performs the signature after the confirmation of the digital signature described below has been performed with respect to the signature by the first party, and then transmits data to the first party, and a case where the signature is performed before the confirmation is performed. The same applies to a contract between three or more parties.

The public key corresponding to the secret key used for the signature is required to verify the signature on the device 120 that received the signed data to be signed 200. An approver ID for identifying an approver may be transmitted as a part of data to be signed 200 or it may be transmitted at the same time with or before or after the data to be signed 200 in addition to the data to signed. Here, in one example, the public key itself is used as the approver ID. The signature with respect to the data to be signed 200 includes the signature with respect to the hash value of the data to be signed 200.

For example, if the document 110 is a request for approval, it is conceivable to transmit the data to be signed 200 to which a signature is added to the device 120 used by the drafter. Instead of directly transmitting the data to the drafter, etc., the data to be signed and the signature with respect to the data can be stored in a database or a blockchain that can be accessed by devices within a certain range, such as within a company, or devices satisfying certain conditions, to allow the device 120 to access the database or blockchain to obtain the data or to allow the device 120 to obtain the data from the database or blockchain. It is conceivable that access to such database or blockchain may not be limited to in-house or the like.

As an example, the addition of a signature to the data to be signed 200 can be performed by placing a two-dimensional code, such as a QR code (registered trademark), representing the signature at any position in or near the image 201. The placement position of the two-dimensional code can be predetermined, such as upper right, upper left, lower left, lower right, etc. Or, a screen for determining the placement position of the two-dimensional code can be displayed on the display screen of the digital signature apparatus 100 after the document 110 is captured so that the approver can specify the position. Regarding the date 202, input 203, and the like, positions can be similarly determined in or near the image 201 and placed at the positions. More specifically, it is conceivable to clear pixels in the upper right, upper left, lower left or lower right area inside the image 201 in white or black, and display the date 202, input 203, etc. in this area in black or white, and also display a two-dimensional code representing a signature. In this case, the image formed by filling an area within the document image 201 with a predetermined color will be considered as the data to be signed 200. The date 202, etc. may be displayed in a first white or black area, and the two-dimensional code may be displayed in a second white or black area other than the first area. As the color of the area to be cleared, 0xFBFBFB, etc. may be used in addition to the case where 0xFFFFFF is used.

If there are no elements other than the image 201, such as the date 202, the input 203, etc., the data to be verified can be an image in a general format by newly generating an image in a general JPEG format, etc., in which a two-dimensional code is placed. It is easier to handle than adopting the original data structure shown in FIG. 2. If a date 202 exists, it is sufficient to generate a new image in which the date 202 is placed in addition to a two-dimensional code, and the same is true if an input 203 exists. In this case, the data to be signed 200 of the signature represented by the two-dimensional code will be an image 201 with the date 202 placed on it. If an input 203 exists and is also placed on the image 201, then the data to be verified is formed by placing the date 202 and the input 203 on an image formed by filling an area within the image 201 with a predetermined color.

With respect to an approver ID, an approver ID and a signature can be represented by a two-dimensional code, or the file name of an image can be used as an approver ID. Depending on the type of public key cryptography, a public key can be calculated backwards from a signature as an approver ID. For example, this is the case for ECDSA.

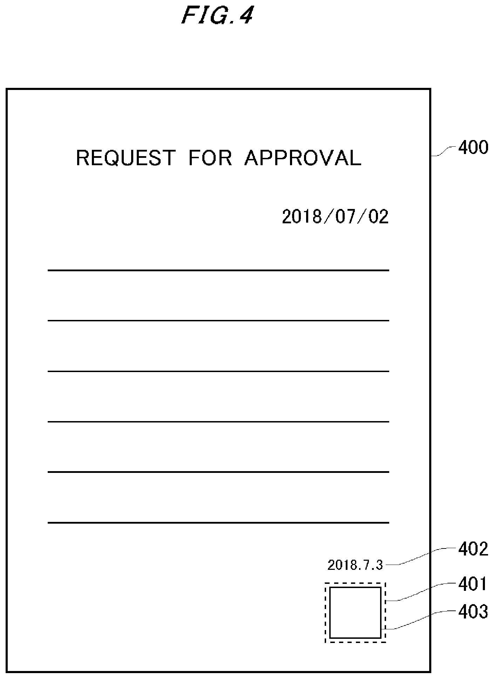

FIG. 4 shows an example using a two-dimensional code for signature. The data to be signed 400 is an image formed by filling the lower right area 401 in an image, obtained by capturing a document 110, as a display area of a two-dimensional code by a predetermined color, such as 0xFBFBFB. Since the area 401 does not necessarily have a boundary line, it is indicated by a dashed line. The shape of the area 401 is shown as a rectangle, but it can also be a circle, oval, or other shape. The data to be signed 400 includes the date 402 of the signature. More precisely, it is an image formed by placing the date 402 on an image formed by filling the area 401 in an image, obtained by capturing the document 110, with a predetermined color. The data to be signed 400 including the date 402 is signed using a secret key. By placing the two-dimensional code 403 representing a signature with respect to the data to be signed 400 in the area 401 to generate a new image, an image in a general format can be used for the data transmitted from the digital signature apparatus 100. The date 402 can also be placed within the area 401. An input regarding the signer's approval or rejection of the contents of the document 110 can also be placed within or outside the area 401.

If there is more than one signer, it is sufficient to provide multiple similar areas, and it is conceivable that an image containing the two-dimensional code of a signature by other signer is used as the data to be signed by the next signer.

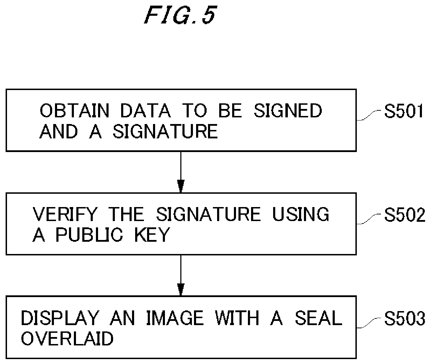

FIG. 5 shows the flow of the method for confirming a digital signature according to the first embodiment of the present invention. First, the device 120 obtains the data to be verified, i.e., the data to be signed and the signature (S501). If the data to be verified is an image in which the signature using a secret key is represented in a two-dimensional code and placed in an area, the signature being made with respect to an image formed by filling the area within a document image with a predetermined color, the device 120 recognizes the two-dimensional code and obtains the signature represented by the two-dimensional code.

Next, the device 120 verifies the signature by determining whether the signature is provided by the owner of the public key (S502). The verification of the signature may be performed at a verification apparatus (not shown) accessible from the device 120, and the verification result may be returned to the device 120.

As an example, if a new image in which a two-dimensional code representing a signature is placed in or near the image 201 is used as the data to be verified, verification can be performed by determining whether or not the two-dimensional code is a signature for the hash value of the image in which the two-dimensional code is replaced by the color of the area in which the two-dimensional code is placed.

If the signature is successfully verified, the device 120 overlays a predetermined seal impression on the document image 201 and displays it on the display screen of the device 120 (S503). The user of the device 120 can thus visually confirm that the digital signature has been added by one having approval authority. Other than a seal, a visual element for confirming successful verification stored in association with the approver or approver ID can be displayed.

The overlay of the visual element is preferably displayed at the location of the two-dimensional code when the received data to be signed 200 is an image formed by placing a two-dimensional code representing a signature. In this way, the user of the device 120 can more intuitively confirm that the verification of the signature was successful. In this case, the visual element may be displayed opaquely to increase its visibility. However, since it is only necessary for the person confirming the digital certificate to be able to confirm that the verification was successful, it is sufficient that the successful verification is at least communicated by any method other than an overlay.

The overlay of the visual element may be made so that the position of the overlay on the image 201 can be specified by the approver at the time of signature to display the overlay at the specified position, even when a signature with a two-dimensional code is not used. The size of the overlay may also be specified.

In one embodiment, when the data to be signed 200 includes a date 202, the signature may be treated as invalid if certain conditions are met, even if it is successfully verified that the signature was made by a legitimate signer. In this case, no overlay of the seal is performed. As an example, it is conceivable that the data to be signed 200 includes the expiration date or valid period of the signature as the input 203. It is also conceivable that the device 120 stores the verification rule for the date 202, which includes expiration date or valid period of the signature, and performs the verification of the date 202 at the same time as or before or after the verification of the signature. This may, in other words, allow the verification of the data to be verified to include a verification other than the verification of a signature, and when the data to be verified was successfully verified, communication for confirming that may be made.

The device 120 is capable of executing a program for verifying a signature or data to be verified and displaying a seal, which can preferably be installed on the device 120 as an application. The device 120 is capable of accessing a public key corresponding to a secret key used in a signature for verification of the signature. For example, a list of public keys of potential signers can be stored in the device 120 or in a storage medium or storage apparatus accessible from the device 120.

For example, when the document 110 is a request for approval, public keys of the persons who may be the decision makers within a company can be officially distributed to the persons who may be the drafters, and stored in the device 120 of each drafter to enable smooth confirmation of a digital signature. In this case, by associating the public keys with the approvers, the drafter can confirm that the digital signature was made by the owner of the public key, and also confirm that the owner is positioned as a legitimate decision maker or approver within the company. The correspondence between public keys and approvers or approver IDs may be stored in a database or blockchain accessible by devices within a certain range, such as within the company, or devices that meet certain conditions, and access to the database or blockchain may not be limited to in-house.

When the device 120 receives its public key from the digital signature apparatus 100 as the approver ID, the device 120 can confirm the legitimacy of the approver by determining whether the public key or its hash value matches any of the one or more public keys or their hash values stored in the device 120 or in a storage medium or storage apparatus or a blockchain accessible from the device 120.

When the device 120 receives data other than its public key from the digital signature apparatus 100 as an approver ID, it can confirm the legitimacy of the approver by obtaining the public key associated with the approver or the approver ID, by referring to the correspondence between approver IDs and public keys stored in the device 120, or in a storage medium or storage apparatus or blockchain accessible from the device 120, to verify the signature. Alternatively, it is conceivable to perform identity confirmation through inquiry to an external identity confirmation service by transmitting an identity confirmation request with respect to an owner of a public key directly or indirectly obtained by the device 120 to a server or a blockchain network or a node which is part of the blockchain network accessible from the device 120.

For example, when the document 110 is a contract, confirmation of a digital signature can be smoothly performed by providing respective public keys to counter parties and storing them in respective devices. In this case, a correspondence between public keys and their owners may be stored in a database or blockchain that can be accessed via a computer network. Alternatively, it is conceivable to perform identity confirmation through inquiry to an external identity confirmation service by transmitting an identity confirmation request with respect to an owner of a public key directly or indirectly obtained by a device to a server or a blockchain network or a node which is part of the blockchain network accessible from the device.

In the above description, the digital signature apparatus 100 captured a paper document and generated a digital document image, but it is also possible for the digital signature apparatus 100 to receive a digital document generated by another device and perform a signature to the digital document. In this case, a screen for determining the placement position of a two-dimensional code can be displayed on the display screen of the apparatus of the document image transmitter (not shown) so that the transmitter can specify the placement position of the two-dimensional code. Furthermore, the present invention can be applied when a digital document is generated or received at the digital signature apparatus 100 to perform the signature. Naturally, in a situation where image capturing at the digital signature apparatus 100 is not necessary, the digital signature apparatus 100 may not have an image capturing unit 101. The present invention is also applicable to performing a signature when an image other than document image, such as a moving image, is the data to be signed.

The above description assumes that a signature is made by an approver, but as explained in the second embodiment, the signature can be made not only for approval but also for rejection, etc. Therefore, an approver can be read as a signer and an approver ID as a signer ID.

It is to be noted that if the term "only" is not written, such as in "based only on x", "in response to x only", or "in the case of x only", in the present specification, it is assumed that additional information may also be taken into account. Also, as an example, it is to be noted that a description "b is performed in the case of a" does not necessarily mean "b is always performed in the case of a" except where expressly stated.

In addition, as a caveat, even if there are characteristics of a method, a program, a terminal, an apparatus, a server or a system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

### (Second embodiment)

In the first embodiment, it is explained that a signature with respect to a digital document and its confirmation is performed at the digital signature apparatus 110, but at least some of the processes can also be performed at the server. In the second embodiment, we describe an example where at least some of the processes is performed at the server when a contract is signed by the first and second signers. Here, it is assumed that the digital document to be signed is stored in some form in the server. For example, one signer may take an image of a paper document with the device and transmit it to the server, or one signer may transmit a digital document generated by the device to the server. The server provides a service for digitally signing digital documents, and the first and second signers can transmit or receive data to or from the first and second devices, respectively, to and from that server that provides the service. Each of the devices and server comprises a communication unit, a processing unit, and a storage unit, as described in the first embodiment, and each device has an image capturing unit, if necessary.

First, the server transmits a digital document to the first device (S601). The first device signs the received digital document with the first secret key stored in the apparatus or in a storage medium or storage apparatus accessible from the apparatus (S602). The signature can be a signature to a hash value of the digital document to be signed. The first apparatus then transmits the first signature generated using the first secret key to the server (S603). Here, if an area filled with a predetermined color for placing a two-dimensional code representing a signature is not formed in the digital document transmitted by the server, it is preferable to form the area before transmission at the server or before the signature at the first apparatus. If the first apparatus uploads the digital document to be signed to the server, the digital document can also be signed at this time, so that transmission of the digital document from the server to the first apparatus is not necessary.

The transmission of the first signature to the server includes, in addition to transmitting the first signature, transmitting a two-dimensional code representing the first signature, and transmitting a digital document formed by placing the two-dimensional in an area filled with a predetermined color in the digital document that is the data to be signed.

Similarly, for the second apparatus, the server transmits a digital document (S604), the second apparatus signs it with the second secret key (S605), and then transmits the second signature generated using the second secret key to the server (S606). In this case, the signature target at the second apparatus can be the same digital document as the signature target at the first apparatus, or it can be a first signed digital document formed by placing a two-dimensional code representing the first signature generated at the first apparatus. In the case of the former concurrent signature system, the transmission of the digital document from the server to the second apparatus can be done before the first signature from the first apparatus to the server.

In the case of a concurrent signature system, the server stores the first and second signatures associated with the digital document to be signed and, if necessary, generates an digital document with a two-dimensional code representing the first signature placed in the first area for the first signature in the data to be signed and a two-dimensional code representing the second signature placed in the second area for the second signature.

The server can verify the signatures in response to a request for confirmation of the signatures from the first or second apparatus, or, for example, in response to the fact that signatures have been stored, the number of the signatures corresponding to the number of areas in which two-dimensional codes representing signatures are placed (S607). With respect to each signature, counterparty's signature can be verified by each signer in the same way as described in the first embodiment, but it can also be done at the server.

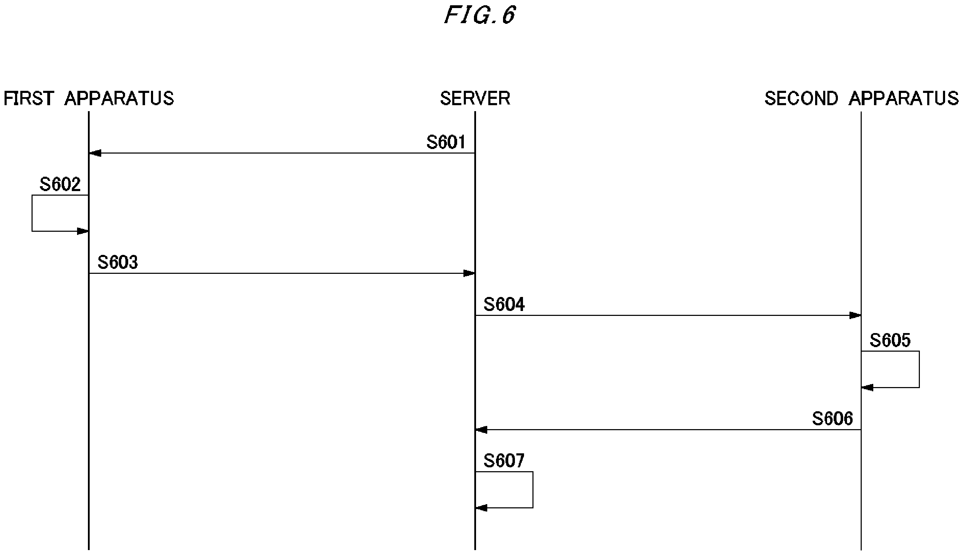

The example in FIG. 6 describes a contract that is signed by the first and second signers, but the same applies when the number of signers is three or more. If the user of the first apparatus signs and the user of the second apparatus confirms the signature, the signature at the second apparatus described in FIG. 6 does not occur. In this case, the user of the first apparatus may designate a person to confirm the signature at the same time as or before or after transmitting the signature with the first secret key. The server may prompt confirmation by transmitting a notification to the designated person's e-mail address or other contact information that the signature has been made and can be confirmed, or by transmitting a digital document in which a two-dimensional code representing the signature is placed.

It is added that the various variations not explicitly mentioned in the second embodiment can be applied as appropriate to those described in the first embodiment.

### REFERENCE SIGNS LIST

- 100: digital signature apparatus
- 101: image capturing unit
- 102: communication unit
- 103: processing unit
- 104: storage unit
- 110: document
- 120: device
- 200: data to be signed
- 201: image
- 202: date
- 203: input

## Claims

1. A method for confirming a digital signature that has been added to a document, comprising:
receiving (S501), by a computer (120), a digital document formed by placing a signature represented by a two-dimensional code (403) in an area (401), which is filled with a predetermined color, within data to be signed (400) obtained by digitalizing the document, wherein the signature is a signature with respect to the data to be signed using a secret key and the two-dimensional code represents a public key in addition to the signature,
verifying (S502), by the computer, the signature using the public key, and
when the verification succeeds, displaying (S503) a visual element overlaid to the area, wherein the visual element is for confirming success of the verification.

2. The method according to claim 1, wherein the visual element is associated with an owner of the public key.

3. The method according to claim 2, wherein the visual element is a seal associated with an owner of the public key.

4. The method according to claim 1, further comprising confirming, by the computer, legitimacy of the received public key based on the public key with reference to a correspondence between public keys and possible signors, the correspondence stored in a blockchain accessible by the computer.

5. The method according to claim 1, further comprising transmitting, by the computer, an identity confirmation request of an owner of the public key.

6. The method according to claim 1, wherein the verifying includes determining whether the signature represented by the two-dimensional code is a signature with respect to a digital document formed by filling the area of the received digital document with the predetermined color.

7. A program for causing a computer to perform a method for confirming a digital signature that has been added to a document, the method comprising:
receiving, by the computer (120), a digital document formed by placing a signature represented by a two-dimensional code in an area, which is filled with a predetermined color, within data to be signed obtained by digitalizing the document, wherein the signature is a signature with respect to the data to be signed using a secret key and the two-dimensional code represents a public key in addition to the signature,
verifying, by the computer, the signature using the public key, and
when the verification succeeds, displaying a visual element overlaid to the area, wherein the visual element is for confirming success of the verification.

8. A device (120) for confirming a digital signature that has been added to a document, configured to:
receive a digital document formed by placing a signature represented by a two-dimensional code in an area, which is filled with a predetermined color, within data to be signed obtained by digitalizing the document, wherein the signature is a signature with respect to the data to be signed using a secret key and the two-dimensional code represents a public key in addition to the signature,
verify the signature using the public key, and
when the verification succeeds, display a visual element overlaid to the area, wherein the visual element is for confirming success of the verification.

## Patentansprüche

1. Verfahren zum Bestätigen einer digitalen Signatur, die einem Dokument hinzugefügt wurde, Folgendes umfassend:
Empfangen (S501), durch einen Computer (120), eines digitalen Dokuments, das durch Platzieren einer durch einen zweidimensionalen Code (403) dargestellten Signatur in einem mit einer vorbestimmten Farbe gefüllten Bereich (401) innerhalb von zu signierenden Daten (400) gebildet ist, die durch Digitalisieren des Dokuments erhalten werden, wobei die Signatur eine Signatur in Bezug auf die zu signierenden Daten unter Verwendung eines geheimen Schlüssels ist und der zweidimensionale Code einen öffentlichen Schlüssel zusätzlich zu der Signatur darstellt,
Verifizieren (S502) der Signatur durch den Computer unter Verwendung des öffentlichen Schlüssels, und
wenn die Verifizierung erfolgreich ist, Anzeigen (S503) eines visuellen Elements, das dem Bereich überlagert ist, wobei das visuelle Element zur Bestätigung des Erfolgs der Verifizierung dient.

2. Verfahren nach Anspruch 1, wobei das visuelle Element einem Besitzer des öffentlichen Schlüssels zugeordnet ist.

3. Verfahren nach Anspruch 2, wobei das visuelle Element ein Siegel ist, das einem Besitzer des öffentlichen Schlüssels zugeordnet ist.

4. Verfahren nach Anspruch 1, ferner umfassend das Bestätigen der Legitimität des empfangenen öffentlichen Schlüssels durch den Computer auf der Grundlage des öffentlichen Schlüssels unter Bezugnahme auf eine Korrespondenz zwischen öffentlichen Schlüsseln und möglichen Unterzeichnern, wobei die Korrespondenz in einer Blockchain gespeichert ist, auf die der Computer zugreifen kann.

5. Verfahren nach Anspruch 1, ferner umfassend das Übertragen durch den Computer einer Anfrage zur Bestätigung einer Identität eines Besitzers des öffentlichen Schlüssels.

6. Verfahren nach Anspruch 1, wobei das Verifizieren das Bestimmen einschließt, ob die durch den zweidimensionalen Code dargestellte Signatur eine Signatur in Bezug auf ein digitales Dokument ist, die durch Füllen des Bereichs des empfangenen digitalen Dokuments mit der vorbestimmten Farbe gebildet wurde.

7. Programm, um einen Computer zu veranlassen, ein Verfahren zum Bestätigen einer einem Dokument hinzugefügten digitalen Signatur durchzuführen, wobei das Verfahren Folgendes umfasst:
Empfangen, durch den Computer (120), eines digitalen Dokuments, das durch Platzieren einer durch einen zweidimensionalen Code dargestellten Signatur in einem mit einer vorbestimmten Farbe gefüllten Bereich innerhalb von zu signierenden Daten gebildet ist, die durch Digitalisieren des Dokuments erhalten werden, wobei die Signatur eine Signatur in Bezug auf die zu signierenden Daten unter Verwendung eines geheimen Schlüssels ist und der zweidimensionale Code einen öffentlichen Schlüssel zusätzlich zu der Signatur darstellt,
Verifizieren der Signatur durch den Computer unter Verwendung des öffentlichen Schlüssels, und
wenn die Verifizierung erfolgreich ist, Anzeigen eines visuellen Elements, das dem Bereich überlagert ist, wobei das visuelle Element zur Bestätigung des Erfolgs der Verifizierung dient.

8. Vorrichtung (120) zum Bestätigen einer digitalen Signatur, die einem Dokument hinzugefügt wurde, die konfiguriert ist zum:
Empfangen eines digitalen Dokuments, das durch Platzieren einer durch einen zweidimensionalen Code dargestellten Signatur in einem mit einer vorbestimmten Farbe gefüllten Bereich innerhalb von zu signierenden Daten gebildet ist, die durch Digitalisieren des Dokuments erhalten werden, wobei die Signatur eine Signatur in Bezug auf die zu signierenden Daten unter Verwendung eines geheimen Schlüssels ist und der zweidimensionale Code einen öffentlichen Schlüssel zusätzlich zu der Signatur darstellt,
Verifizieren der Signatur unter Verwendung des öffentlichen Schlüssels, und
wenn die Verifizierung erfolgreich ist, Anzeigen eines visuellen Elements, das dem Bereich überlagert ist, wobei das visuelle Element zur Bestätigung des Erfolgs der Verifizierung dient.

## Revendications

1. Procédé permettant de confirmer une signature numérique qui a été ajoutée à un document, comprenant :
la réception (S501), par un ordinateur (120), d'un document numérique formé en plaçant une signature représentée par un code bidimensionnel (403) dans une zone (401), qui est remplie avec une couleur prédéterminée, à l'intérieur de données à signer (400) obtenues en numérisant le document, dans lequel la signature est une signature en relation avec les données à signer en utilisant une clé secrète et le code bidimensionnel représente une clé publique en complément à la signature,
la vérification (S502), par l'ordinateur, de la signature en utilisant la clé publique, et
lorsque la vérification est réussie, l'affichage (S503) d'un élément visuel superposé à la zone, dans lequel l'élément visuel est destiné à confirmer le succès de la vérification.

2. Procédé selon la revendication 1, dans lequel l'élément visuel est associé à un propriétaire de la clé publique.

3. Procédé selon la revendication 2, dans lequel l'élément visuel est un sceau associé à un propriétaire de la clé publique.

4. Procédé selon la revendication 1, comprenant en outre la confirmation, par l'ordinateur, de la légitimité de la clé publique reçue sur la base de la clé publique en se référant à une correspondance entre des clés publiques et des signataires possibles, la correspondance étant stockée dans une chaîne de blocs accessible par l'ordinateur.

5. Procédé selon la revendication 1, comprenant en outre la transmission, par l'ordinateur, d'une demande de confirmation d'identité d'un propriétaire de la clé publique.

6. Procédé selon la revendication 1, dans lequel la vérification inclut la détermination si la signature représentée par le code bidimensionnel est ou n'est pas une signature en relation avec un document numérique formée en remplissant la zone du document numérique reçu avec la couleur prédéterminée.

7. Programme permettant d'amener un ordinateur à exécuter un procédé de confirmation d'une signature numérique qui a été ajoutée à un document, le procédé comprenant :
la réception, par l'ordinateur (120), d'un document numérique formé en plaçant une signature représentée par un code bidimensionnel dans une zone, qui est remplie avec une couleur prédéterminée, à l'intérieur de données à signer obtenues en numérisant le document, dans lequel la signature est une signature en relation avec les données à signer en utilisant une clé secrète et le code bidimensionnel représente une clé publique en complément à la signature,
la vérification, par l'ordinateur, de la signature en utilisant la clé publique, et
lorsque la vérification est réussie, l'affichage d'un élément visuel superposé à la zone, dans lequel l'élément visuel est destiné à confirmer le succès de la vérification.

8. Dispositif (120) permettant de confirmer une signature numérique qui a été ajoutée à un document, configuré pour :
recevoir un document numérique formé en plaçant une signature représentée par un code bidimensionnel dans une zone, qui est remplie avec une couleur prédéterminée, à l'intérieur de données à signer obtenues en numérisant le document, dans lequel la signature est une signature en relation avec les données à signer en utilisant une clé secrète et le code bidimensionnel représente une clé publique en complément à la signature,
vérifier la signature en utilisant la clé publique, et
lorsque la vérification est réussie, afficher un élément visuel superposé à la zone, dans lequel l'élément visuel est destiné à confirmer le succès de la vérification.
